# EUROPEAN PATENT APPLICATION

(11) **EP 1 065 810 A1**
(43) Date of publication of application: **03.01.2001**
(21) Application number: 00112862.8
(22) Date of filing: 16.06.2000
(51) Int. Cl.: H04B 10/17, H04B 10/18

(54) **Multiple-wavelength telecommunication system with automatic gain control**

(30) Priority: 30.06.1999 EP 99112465
(71) Applicant: Optical Technologies U.S.A. Corp., Dover, DE 19901 (US)
(72) Inventor: Meli, Fausto, 29100 Piacenza (IT); Di Pasquale, Fabrizio, 20129 Milano (IT); Sacchi, Giovanni, 20126 Milano (IT); Turolla, Silvia, 24068 Seriate (Bergamo) (IT)
(74) Representative: Giannesi, Pier Giovanni

(57) **Abstract**

Optical telecommunication system, comprising: a transmitting station capable of transmitting a multiple-wavelength optical signal comprising at least two predetermined wavelengths, a wavelength division multiplexer for sending the said transmission signals to an optical fibre transmission line and a station for receiving the said transmission signals. The system also comprises a station for amplifying the optical signal, located between the said transmitting station and the said receiving station, comprising at least a first amplification section and at least a second amplification section and a gain stabilizing circuit. The said amplification station additionally comprises an attenuating component located between the said two sections.

The said gain stabilizing circuit comprises a circuit for the recirculation of the spontaneous emission, the said circuit being common to the said first amplification section and the said second amplification section.

## Description

The present invention relates to a telecommunication system including optical amplifiers, particularly suitable for wavelength division multiplexing, or WDM, transmission.

For wavelength multiplexing, or WDM, transmission, it is necessary to send a plurality of transmission signals, independent of each other, along the same line, consisting of optical fibres, by means of multiplexing in the domain of the optical wavelengths; the transmitted signals may be either digital or analog, and are distinguished from each other in that each of them has a specific wavelength, different from those of the other signals.

The implementation of this WDM transmission requires the allocation of a specific waveband of predetermined amplitude, referred to hereafter as a channel, to each of the signals at different wavelengths.

These signals, identified hereafter by a wavelength value, called the central wavelength of the signal, have a certain spectral amplitude about the central wavelength value, which depends, in particular, on the characteristics of the laser which is the source of the signal, and on the modulation imparted to the signal to associate a data element with it. Typical values of spectral amplitude measured at the mean height of the signal emitted by a laser, in the absence of modulation, are approximately 10 MHz; in the presence of an external modulation, at 2.5 Gbit/s for example, there is a spectral amplitude at mean height of approximately 5 GHz.

In order to transmit signals on a large number of channels, making use of what is called the third transmission window of the silicon fibres and the passband of the optical amplifiers (typically from 1525 to 1620 nm, and in particular from approximately 1529 to approximately 1602 nm), the wavelength separation between the signals themselves is conveniently of the order of nanometres or fractions thereof.

In this type of transmission, it is advantageous for the various channels to be virtually equivalent to each other in terms of power levels, signal quality, signal-to-noise ratio and binary error rate (BER).

When amplifiers, particularly optical amplifiers, are present, these must have a virtually uniform response for all the channels transmitted; additionally, in order to transmit a large number of channels, the band in which the amplifier can operate must be wide.

Optical amplifiers are based on the properties of a fluorescent dopant, for example a rare earth, and in particular erbium, introduced as a dopant into the core of an optical fibre; this is because erbium, when excited by the application of pumping light energy, has a high emission in the field of wavelengths corresponding to the band of minimum attenuation of the light in the silicon-based optical fibres.

When a light signal having the wavelength corresponding to this high emission is passed through an erbium-doped fibre kept in the excited state, the signal causes the transition of the excited erbium atoms to a lower level, with stimulated light emission at the wavelength of the signal, generating an amplification of the signal.

As soon as the erbium atoms enter the excited state they also spontaneously begin to decay, and this generates a random emission which forms a "background noise" which is superimposed on the stimulated emission corresponding to the amplified signal.

The light emission generated by the injection of pumping light energy into the "doped", or active fibre may take place at a number of wavelengths, typical of the dopant substance, thus producing a spectrum of fluorescence of the fibre.

In particular conditions, for example in the presence of the switching on and off of one or more of the sources, and consequently in the presence of a variable number of channels supplied simultaneously in the line and in the amplifiers, there are variations of the value of optical power between the amplifiers, which may lead to variations of gain of the amplifiers, such that the quality of transmission is adversely affected.

In "Electronics Letters", 28 March 1991, vol. 27, no. 7, pp. 560-561, M. Zirngibl et al. describe an optical amplifier of the erbium-doped fibre type, provided with an optical feedback loop, in which a fraction of amplified spontaneous emission (ASE) is extracted at the output of the amplifier, filtered at a selected wavelength, attenuated and finally reinjected at the input of the amplifier, which therefore has a laser loop configuration, in which a single wavelength, different from the transmission wavelength, is fed back.

The oscillation ("lasing") conditions are controlled by tuning the selected wavelength and varying the attenuation of the feedback loop.

In this condition, the gain for signals at any wavelength different from the oscillation wavelength in the laser loop is independent of the input power of all the optical channels.

The Applicant has observed that the device described, together with the devices described in the publications cited below, imparts a significant degree of attenuation to the transmission channels, since a fraction of them is extracted together with the spontaneous emission and eliminated in the laser loop, introducing a significant gain penalty, indicated as 4-8 dB in the experiment described in the article.

U.S. Patent 5.088.095 (M. Zirngibl) describes an optical fibre amplifier with stabilized gain, in which a feedback loop is connected between the input port and the output port of an optical fibre doped with a rare earth and pumped by a laser. A narrow-band filter allows a selected wavelength of the spontaneous emission of the amplifier, different from the pumping and signal wavelengths, to pass from the output of the amplifier to its input.

U.S. Patent 5.128.800 (M. Zirngibl) describes an optical fibre amplifier with switchable gain, in which a feedback loop is connected between the input port and the output port of the amplifier; this loop comprises a homogeneously broadened non-linear dissipative medium.

Interference and isolating filters can be used in the loop to select the wavelengths transmitted in this portion of the device.

U.S. Patent 5.155.780 (M. Zirngibl) describes an optical limiting amplifier which supplies at its output a power signal which is virtually constant for input signals of variable power, in which a variable power signal is divided into two signals; the first signal is supplied to an amplifier in a first "forward" direction, and the other is supplied in the opposite direction, after having passed through a saturable absorber.

Since the signal leaving the saturable absorber varies more widely than the signal at its input, the saturation of the amplifier caused by the signal in the "backward" direction keeps the output power of the amplifier constant, regardless of the input power.

U.S. Patent 5.239.607, in the name of V.L. da Silva et al., describes an optical amplifier with a flattened gain spectrum in which the amplifier is arranged to operate with a loop laser, with an insulator connected in the loop, which allows propagation in the loop only in the direction opposite that of the signal to be amplified.

The gain is locked at a value determined by the losses in the loop.

In IEEE Photonics Technology Letters, vol. 3, no. 5, May 1991, pp. 453-455, there is a description of an erbium-doped fibre amplifier (EDFA) in which an error signal is generated by the fluctuations of the ASE, monitored at a given wavelength λ_{ref} of the output spectrum of the EDFA. This signal is used to modulate the intensity of a compensation signal at a wavelength λ_{comp} injected at the input of the amplifier, which is used to keep the saturation level constant in the amplifier.

U.S. Patent 5.598.491, in the name of J. Ohya, describes an optical transmission system inside of which there is an optical amplifier which comprises a selector for selecting part of the spontaneous emission, generated in the erbium-doped fibre present in the amplifier, which has a wavelength lower than that of the amplified signal.

This fraction of the spontaneous emission is reinjected at the input of the amplifier to keep the gain of the amplifier virtually constant when the power and wavelength of the input signal varies.

The Applicant has observed that, in stablilized-gain amplifiers with feedback loops according to the prior art, the stabilization is achieved at the cost of a significant increase in the noise figure. In particular, the Applicant has observed that the noise figure of these amplifiers increases as the attenuation along the feedback loop decreases.

The Applicant has noted that, in amplifiers with multiple stages, gain control according to the indicated prior art applied to one of the stages, to the output stage for example, does not guarantee effective stabilization, since any discrepancies between the channels are amplified in the stages without gain control. The stage to which the control is applied has a dynamic range which may not be sufficient to stabilize all the channels.

On the other hand, gain control applied to each stage, in the presence of devices between the stages which affect the behaviour of the amplifier, may cause difficulties in the calibration of the individual controlled stages. Moreover, the ASE of each stage may cause a further increase in the overall noise figure of the amplifier.

Additionally, in these amplifiers a significant fraction of the recirculating ASE may be transmitted to the line. This may impose limits on the maximum number of available transmission channels owing to non-linear phenomena, particularly in line fibres with a low effective area and/or low dispersion.

According to the present invention, it has been found that, in a multiple-stage amplifier, in which each stage has at least one active fibre supplied by a pump laser and has at least one attenuating component located between the stages, it is possible to stabilize the gain of the amplifier as a whole by using a single circuit in which a fraction of recirculating ASE passes through at least one stage located before the said attenuating component and at least one stage after the said attenuating component. Advantageously, the recirculating ASE does not pass through the attenuating component located between one stage and the next, so that the said ASE does not affect the transmission signals and/or the said attenuating component does not modify the characteristics of the said ASE.

Thus the gain in all the channels is kept virtually constant, even in the presence of a variable number of channels present in the amplifier. This is because the level of ASE circulating in the loop is regulated in a virtually automatic way with respect to the number of channels present, and the ASE absorbs the excess pump power which would be available if any of the channels were absent, leaving an available pump level in the channels present which is virtually constant in all conditions.

Additionally, the control is completely localized, in other words it takes place by regulating the attenuation of the path of the ASE. Additionally, the ASE remains completely within the amplifier. No significant residue of the said ASE is transmitted to the transmission line.

A first aspect of the present invention relates to an optical telecommunication system comprising:
- at least one transmitting station capable of transmitting a multiple-wavelength optical signal comprising at least two predetermined wavelengths,
- an optical fibre transmission line,
- at least one receiving station, the said optical fibre line connecting the said transmitting and receiving stations,
- a station for amplifying the optical signal, located between the said transmitting station and the said receiving station, comprising at least a first amplification section and at least a second amplification section and a gain stabilizing circuit, the said amplification station additionally comprising an attenuating component located between the said two sections,
   characterized in that the said gain stabilizing circuit comprises a circuit for the recirculation of the spontaneous emission, the said circuit being common to the said first amplification section and the said second amplification section.

In particular, the said circuit for the recirculation of the spontaneous emission comprises a path which does not pass through the said attenuating component.

Preferably, the said circuit for the recirculation of the spontaneous emission comprises a device for selecting a wavelength of the spontaneous emission.

In particular, the said device for selecting a wavelength is a wavelength-selective filter located after the said second section.

In particular, the said selecting device comprises at least one pair of filters, of which one is located before the first amplification section and one is located after the second amplification section.

Preferably, the said circuit for the recirculation of the spontaneous emission comprises a first path in which the said spontaneous emission is extracted between the said first amplification section and the said attenuating component, and is supplied to the said second amplification section.

In particular, the said circuit for the recirculation of the spontaneous emission has two directions of travel in the amplification sections, one being identical and one opposite to the direction of travel of the transmission signals, the said direction of travel being identical in the said first path.

Additionally, the said circuit for the recirculation of the spontaneous emission further comprises a second path in which the said spontaneous emission in the opposite direction is extracted between the said second amplification section and the said attenuating component and is supplied to the said first amplification section.

In particular, the said first path comprises:
- an optical circulator with three ports, whose first port is connected after the said first amplification section, and whose second port is connected to a selective grating located before the said attenuating component,
- a first optical coupler which couples the signals from the said attenuating component and from the said third port of the optical circulator.
Preferably, the said second path comprises
- an optical circulator whose first port is connected to a variable attenuator, whose second port is connected to the said filter located before the said first amplification section, and whose third port is connected to the said first amplification section,
- an optical splitter located before the said second amplification section, which sends part of the signal from the input of the said second section partly towards the said variable attenuator.
Alternatively, the said second path comprises
- an optical splitter located before the said second amplification section, which sends part of the signal from the input of the said second section partly towards a variable attenuator,
- a second optical coupler which sends the signal from the said variable attenuator to the said filter.

Preferably, the said optical coupler couples at least 60% of the optical power of the signal from the said attenuating component.

Preferably, the said optical splitter sends at least 5% of the optical power towards the said variable attenuator.

Preferably, the said coupler couples at least 5% of the optical power from the said variable attenuator towards the said filter.

Preferably, the said device for selecting a wavelength of the spontaneous emission selects a wavelength of the spontaneous emission close to the spectrum of the wavelengths of the channels.

A further aspect of the present invention relates to an optical amplifier for multiple-wavelength signals, comprising:
at least a first amplification section, at least a second amplification section and a gain stabilizing circuit, the said amplification station additionally comprising an attenuating component located between the said two sections,
   characterized in that the said gain stabilization circuit comprises a circuit for the recirculation of the spontaneous emission, the said circuit being common to the said first amplification section and the said second amplification section.

A further aspect of the present invention relates to an optical telecommunications method comprising the steps of:
- generating at least two optical transmission signals, at predetermined wavelengths which are different from each other,
- multiplexing the said optical signals in a single transmission line, forming a multiple-wavelength optical signal comprising the said optical transmission signals,
- transmitting the said multiple-wavelength optical signal by means of the transmission line,
- amplifying the said optical signal along the transmission line,
- sending the said optical signal to a receiving station comprising at least one receiver,
   characterized in that the said step of amplifying the said optical signal comprises the steps of:
- amplifying the said signal in a first amplification section,
- processing the said amplified optical signal in an attenuating component,
- amplifying the said processed optical signal in a second amplification section,
- extracting from the said amplified optical signal a fraction of the spontaneous emission of the said first and second amplification sections,
- recirculating the said fraction of spontaneous emission into the said first and second amplification sections in such a way that this fraction does not pass through the said attenuating component.

In particular, the said recirculation step additionally comprises the step of attenuating the said fraction of spontaneous emission.

A further aspect of the present invention relates to a method for stabilizing the gain of an optical amplifier, comprising the steps of:
- amplifying an optical signal in a first amplification section of the amplifier,
- processing the said amplified optical signal in an attenuating component,
- amplifying the said processed optical signal in a second amplification section of the amplifier,
   characterized in that it additionally comprises the following steps:
- extracting from the said amplified optical signal a fraction of the spontaneous emission of the amplifier itself,
- recirculating the said fraction of spontaneous emission in the said first and second amplification sections in such a way that it does not pass through the said attenuating component.

In particular, the recirculation step additionally comprises the step of attenuating the said fraction of spontaneous emission.

Further details may be obtained from the following description, with reference to the attached drawings, which show:
- in Fig. 1a,: a diagram of a multiple-wavelength telecommunication system;
- in Fig. 1b,: a diagram of a transmitting station for a multiple-wavelength telecommunication system;
- in Fig. 1c,: a graph of the spectral emission of an optical amplification station in the waveband from 1525 nm to 1620 nm.
- in Fig. 2,: a diagram of a double-band optical amplifier according to one embodiment of the present invention;
- in Figs. 3a, b,: the graph of spectral emission of the amplifier of Figure 2 in an open loop condition with, respectively, 16 channels transmitted in the band BB and 48 channels transmitted in the band RB1;
- in Figs. 4a, b,: the graph of spectral emission of the amplifier of Figure 2 in a closed loop condition with, respectively, 16 channels transmitted in the band BB and 48 channels transmitted in the band RB1;
- in Figs. 5a, b,: the graph of spectral emission at the output of the amplifier of Figure 2 in a closed loop condition, with, respectively, one channel transmitted in the band RB1 and one in the band BB;
- in Fig. 6,: the graph of spectral emission at the output of the amplifier of Figure 2 in a closed loop condition, with 48 channels transmitted in the band RB1 and none in the band BB;
- in Fig. 7,: the graph of spectral emission at the output of the amplifier of Figure 2 in a closed loop condition, with no channel transmitted in the band RB1 and 16 channels transmitted in the band BB;
- in Fig. 8,: the graph of spontaneous emission in an optical amplifier in the waveband from 1520 nm to 1570 nm.
- in Fig. 9,: a diagram of an optical amplifier according to a further embodiment of the present invention;
- in Fig. 10,: an experimental configuration for the amplifier of Figure 9;
- in Fig. 11,: the graph of spectral emission at the output of the amplifier of Figure 9 in a closed loop condition, with 64 channels transmitted;
- in Fig. 12,: the graph of spectral emission at the output of the amplifier of Figure 9 in a closed loop condition, with 4 channels transmitted;
- in Fig. 13,: the graph of spectral emission at the output of the amplifier of Figure 9 in a closed loop condition, with a different set of 4 other channels transmitted;
- in Fig. 14,: the graph of spectral emission at the output of the amplifier of Figure 9 in a closed loop condition, with a different set of 4 other channels transmitted;
- in Fig. 15,: a graph of the gain of the amplifier of Figure 9 for one channel as a function of the loop attenuation value A and the input power;
- in Fig. 16,: a graph of the gain of the amplifier of Figure 9 for one channel as a function of the loop attenuation value A, the input power and the wavelength of the recirculating spontaneous emission;
- in Fig. 17,: the graph of the spontaneous emission in an optical amplifier in the waveband from 1570 nm to 1620 nm.

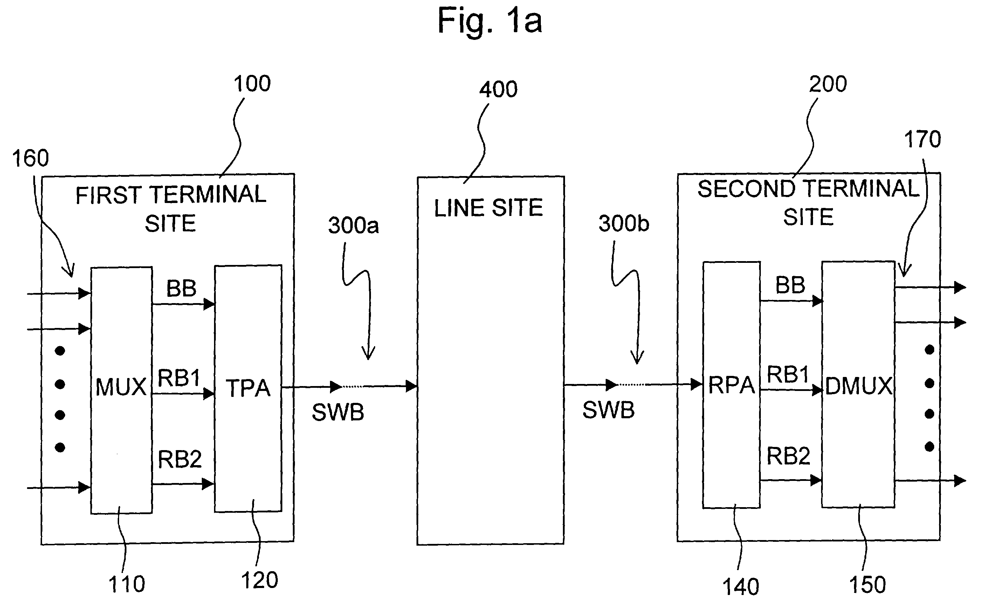

With reference to Figure 1a, an optical transmission system includes a first terminal site 100, a second terminal site 200, an optical fibre line 300a, 300b which connects the two terminal sites and at least one line site 400 interposed along the said optical fibre line.

For the sake of simplicity, the transmission system described is unidirectional - in other words, the optical signal travels from one terminal site to the other - but the following considerations are also valid for bidirectional systems, in which the optical signal travels in both directions.

In this example, the system is suitable for transmission in a maximum of 128 channels, but the maximum number of channels may be different, according to the configurations which the system may assume.

The first terminal site 100 preferably comprises a multiplexing section 110 (MUX) for a plurality of input channels 160 and a power amplification section 120 (TPA).

The second terminal site preferably comprises a preamplification section 140 (RPA) and a demultiplexing section 150 (DMUX) for a plurality of output channels 170.

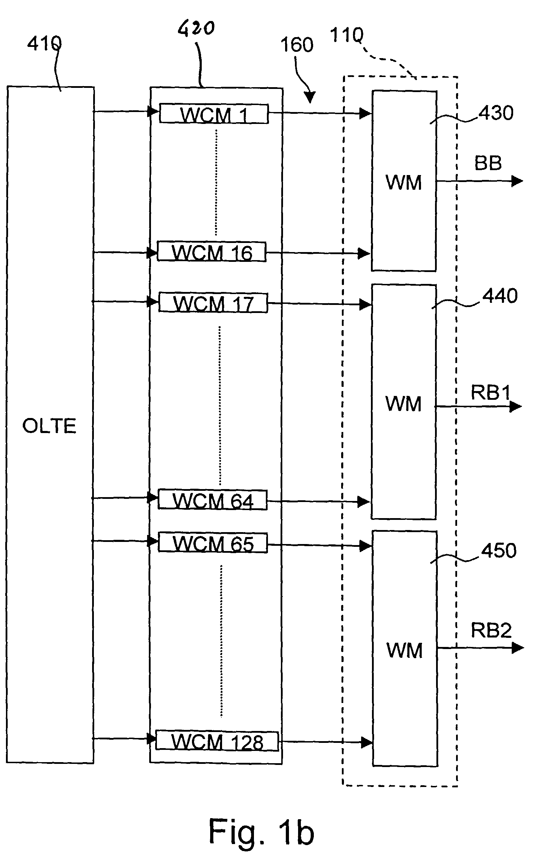

Each input channel 160 is received by the multiplexing section 110, described in detail in Figure 1b below, which groups the channels preferably into three sub-bands, indicated subsequently as BB (blue band), RB1 (red band 1) and RB2 (red band 2). Equally, the optical transmission system may provide division into a number of sub-bands which is greater or smaller than the three described. The three sub-bands are sent to the power amplification section 120 and then to the line 300.

The power amplification section 120 preferably receives the three sub-bands, separated from each other by the multiplexing section, and amplifies them separately, and then combines them to produce a wide-band WDM signal (SWB) to be sent to the transmission line 300. The line site 400 receives the wide-band signal WDM, re-divides it into the three sub-bands BB, RB1 and RB2, amplifies the signals of the three sub-bands separately, and adds some channels to, or removes some channels from, these three sub-bands if necessary to reconstruct the wide-band WDM signal.

Further line sites 400 may be distributed along the line 300, each in a suitable position according to the section of line travelled through up to this point, whenever it becomes necessary to amplify the WDM optical signal or, more generally, to modify its characteristics.

The second terminal site 200 receives the wide-band signal and amplifies it by means of the preamplification section 140, which preferably divides the WDM signal again into the three sub-bands BB, RB1 and RB2. The demultiplexing section 150 receives the three sub-bands and divides them into single-wavelength signals 170.

The number of input channels 160 may be different from the number of output channels 170, owing to the fact that some channels may be added or removed in the line sites 400.

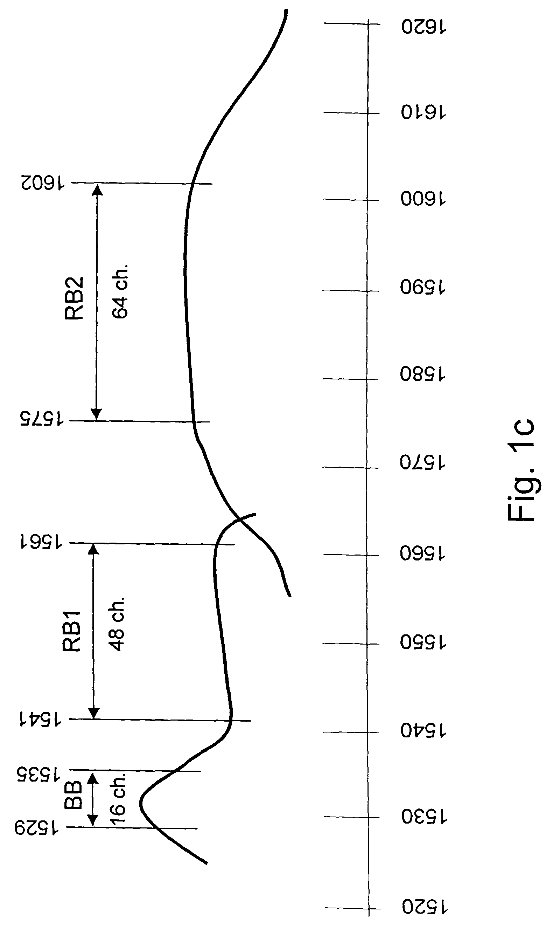

Fig. 1c shows a graph of the spectral emission of the amplifiers in which the three sub-bands of the example described below are indicated. In particular, the first sub-band BB preferably contains signals having wavelengths in the range from 1529 nm to 1535 nm, the second sub-band RB1 preferably contains signals having wavelengths in the range from 1541 nm to 1561 nm, and the third sub-band preferably contains signals having wavelengths in the range from 1575 nm to 1602 nm.

16 channels are preferably allocated in the first sub-band, 48 channels are preferably allocated in the second sub-band, and 64 channels are preferably allocated in the third sub-band.

Advantageously, the adjacent channels in a system having a total of 128 channels have a frequency spacing of 50 GHz.

As may be seen in the graph in Figure 1c, in contrast with the sub-bands RB1 and RB2 for which the curve is virtually flat, the spectrum in the sub-band BB has a central peak, and consequently in this sub-band the amplifiers may advantageously have an equalizing device to make the spectral emission curve flat in this region.

Figure 1b shows in greater detail the input section of the first terminal site 100. This site comprises, in addition to the multiplexing section 110 and the amplification section 120, a line terminal section 410 (OLTE) and a wavelength conversion section 420 (WCM).

The line terminal section 410 corresponds to a terminal apparatus, for example according to one of the SONET, ATM, IP or SDH standards, and includes a number of transmitters/receivers corresponding to the channels which are to be transmitted along the line. In the example described, the OLTE has 128 transmitters/receivers. The OLTE transmits a plurality of channels, each at its own wavelength.

These wavelengths can be modified, to make them compatible with the telecommunication system, by means of wavelength converters WCM1-WCM128 forming part of the section WCM420. The converters WCM1-WCM128 are capable of receiving a signal at a generic wavelength and of converting it into a signal at a predetermined wavelength according to what is described, for example, in U.S. Patent 5267073 in the name of the present Applicant.

Each WCM wavelength converter preferably comprises a photodiode which converts the optical signal to an electrical one, a laser source, and an electro-optical modulator, of the Mach-Zehnder type for example, to modulate the optical signal generated by the laser source at the predetermined wavelength with the electrical signal converted by the photodiode.

Alternatively, this converter may comprise a photodiode and a laser diode modulated directly by the electrical signal of the photodiode in such a way as to convert the optical signal to the predetermined wavelength.

Devices such as amplifiers, re-timers and/or signal squarers may be inserted between the photodiode and the modulator and/or between the photodiode and the direct-modulation laser. Additionally, the connection of an FEC (forward error correction) transmission module is provided, this module adding to the time frame of the signal information which enables the receiver to correct errors which have occurred along the line and consequently to improve the BER.

In a further alternative, this converter comprises a receiver (according to one of the aforementioned standards, for example) to receive an optical signal and convert it into a corresponding electrical signal, together with a laser source and an electro-optical modulator to modulate the optical signal generated by the laser source at the predetermined wavelength, using the electrical signal from the receiver.

Wavelength converters of the type indicated are marketed by the Applicant under the symbols WCM, RXT, LEM.

In all cases, the wavelength converters or the optical signal generators present in the first terminal site 100 generate corresponding operating optical signals having wavelengths within corresponding channels lying in the operating bandwidth of the amplifiers located in succession in the system.

The multiplexing section 110 preferably comprises three multiplexers 430, 440 and 450. For a system with 128 channels, the first multiplexer 430 preferably combines the signals from the first 16 converters WCM1-16 in such a way as to form the first sub-band BB, the second multiplexer 440 combines the signals from the converters WCM17-64 in such a way as to form the second sub-band RB1, and the third multiplexer 450 combines the signals from the converters WCM65-128 in such a way as to form the third sub-band RB2.

The multiplexers 430, 440 and 450 are passive optical devices by means of which the optical signals transmitted along corresponding optical fibres are superimposed in a single fibre; devices of this kind consist, for example, of fused fibre or planar optics couplers, Mach-Zehnder devices, AWGs, polarization filters, interference filters, micro-optics filters, and the like.

By way of example, a suitable combiner is the 8 WM or 24 WM combiner marketed by the present applicant.

The amplification section 120 is capable of amplifying the signals of the sub-bands in such a way as to raise their level to a value sufficient to pass through the following section of optical fibre intervening before new means of amplification, maintaining a sufficient power level at the end to guarantee the required transmission quality. After the said power amplifier, the signals of the bands are then combined with each other, by means of a band-pass combiner filter, in such a way that they are injected into a first section 300 of optical line, normally consisting of a single-mode optical fibre inserted in a suitable optical cable, with a length of several tens (or hundreds) of kilometres, for example approximately 100 kilometres.

The optical fibres used for connections of the type described may be optical fibres of the dispersion shifted type.

However, the type of fibre with a step index profile is preferable in cases in which it is desirable to eliminate or reduce the non-linear effects of intermodulation between adjacent channels, which may be particularly significant in dispersion shifted fibres, particularly if the distance between the channels is very small.

Step index fibres have a dispersion of approximately 17 ps/mm km at wavelengths in the region of 1550 nm. Lower values of dispersion, which are still sufficient to render the said intermodulation phenomena negligible, for example 1.5 to 6 ps/km, may be obtained with the fibres known as NZD, described, for example, in ITU-T Recommendation G.655.

At the end of the said first section of optical line 300a, there is a first line site 400, capable of receiving the multiple-wavelength signals (or WDM signals) which have been attenuated during their travel along the fibre, and of amplifying them to a sufficient level to enable them to be supplied to a second section of optical fibre 300b, whose characteristics are similar to those of the preceding section.

Successive line amplifiers and corresponding sections of optical fibre, which are also normally inserted in corresponding cables, cover the total required transmission distance, until the second terminal station is reached.

For the demultiplexing section 150, it is possible to use a component of the same type as that used in the multiplexing section 110 described above, mounted in the opposite configuration, combined with corresponding band-pass filters located on the output fibres.

Band-pass filters of the type indicated are marketed, for example, by Micron-Optics.

Alternatively, a demultiplexing section 150 suitable for the purpose comprises, for example, an AWG (array waveguide grating) known as 24WD or 8WD, marketed by the present Applicant.

The configuration which has been described can be used in a particularly satisfactory way for transmission over a distance of the order of approximately 500 km, with high transmission speeds, for example 10 Gbit/s per channel or above.

In the system which has been described, the line amplifiers, conveniently made in a multiple-stage configuration, are designed for operation with a total output optical power of approximately 22 dBm.

Additionally, the power amplifier 120 may advantageously have the same configuration as the line amplifiers.

The configuration of the transmission system described above has been found to be particularly suitable for providing the desired performance, particularly for transmission in a plurality of channels with wavelength multiplexing, in the presence of a particular choice of properties of the line amplifiers which form part of it, particularly in respect of the capacity for transmitting the selected wavelengths without any of them being adversely affected with respect to the others.

In particular, uniform behaviour for all the channels can be ensured in the waveband ranging from 1529 to 1602 nm or 1529-1535 nm or 1542-1561 nm or 1575-1602 nm in the presence of amplifiers suitable for operation in cascade, by making use of line amplifiers designed in such a way that they have a substantially uniform (or "flat") response to the various wavelengths when operating in cascade.

The configuration of the amplifier varies according to the waveband which it has to amplify. Wavebands such as those defined above are amplified by amplifiers of different types described below.

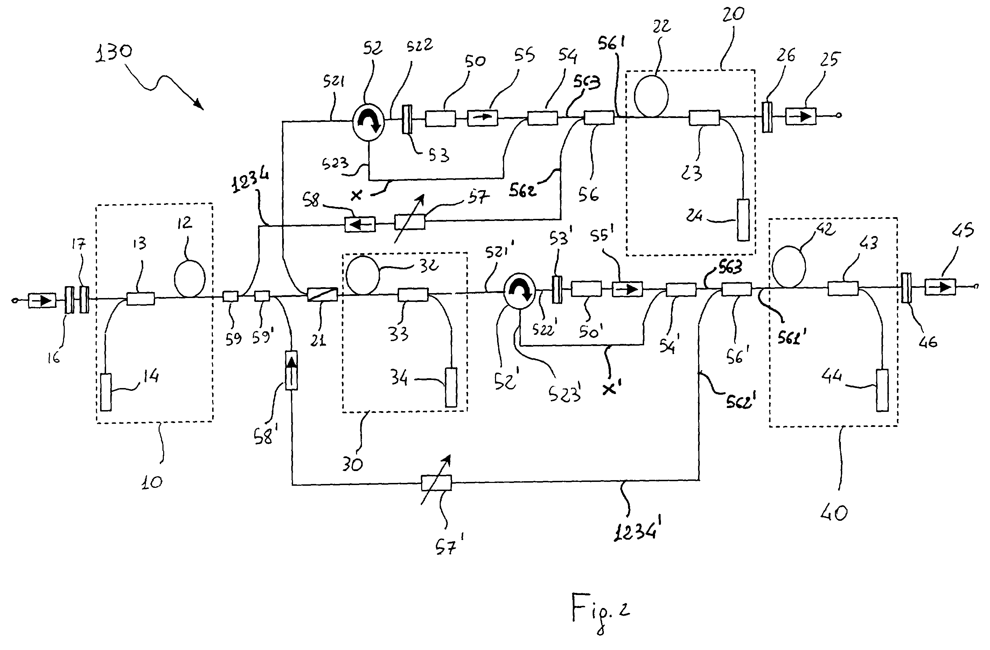

An amplifier according to the present invention capable of amplifying signals in the bands BB and RB1 may have the configuration shown in Figure 2.

The amplifier 130 has a first section in which all the signals from the line are amplified together, and a following section in which the signals of the two bands previously defined as bands BB and RB1 are amplified separately.

This first section comprises a first amplification stage 10 having an active fibre 12 doped with erbium, and a corresponding dichroic coupler 13, to which a pumping laser 14 is connected.

In the illustrated example (but not necessarily), the pumping laser 14 is connected in such a way as to supply pumping energy in a direction parallel with that of the signal in the fibre 12.

After the said first stage 10, the optical signals are divided into the recently defined bands BB ("blue band") and RB1 ("red band 1") by means of a band splitting interference filter 21 made preferably in micro-optical technology.

The channels of the band BB are sent to a second amplification stage 20 comprising an active fibre 22 with a corresponding dichroic coupler 23, to which is connected a pumping laser 24. An optical isolator 25 is located at the output of the said dichroic coupler.

The channels of the band RB1 are sent to a third amplification stage 30 comprising an active fibre 32 with a corresponding dichroic coupler 33, to which is connected a pumping laser 34.

Alternatively, the said first stage 10 and the said third stage 30 may be supplied from a single pumping laser shared by the two active fibres.

The said channels of the band RB1 are then further amplified by a fourth amplification stage 40 comprising an active fibre 42 with a corresponding dichroic coupler 43 to which is connected a pumping laser 44. An optical isolator 45 is located at the output of the said fourth stage.

The pumping lasers 14, 24, 34, 44 may be, for example, lasers of the quantum well type, with the following characteristics:
emission wavelength λₚ = 980 nm;
maximum output optical power Pᵤ = 110 mW.

Lasers of the type indicated are produced, for example, by the present Applicant.

The final stage may alternatively be supplied by a plurality of pumping lasers at different wavelengths whose signals may be coupled together by a WDM coupler in such a way as to make a greater pumping power available.

Preferably, there may be two pumping lasers, one having an emission wavelength of 976 nm and the other having an emission wavelength of 985 nm.

The dichroic couplers 13, 23, 33, 43 may be, for example, fused fibre couplers, formed from single-mode fibres at 980 nm and in the waveband of 1525-1605 nm in such a way as to couple in the active fibres the signals from the pumping lasers and the signals from the inputs of the amplification stages.

Dichroic couplers of the type indicated are known and available commercially, and are produced, for example, by E-Tek Dynamics Inc.

For use in amplifiers for multiple-wavelength systems, the Applicant has produced different types of erbium-doped active fibres, as described in detail in European patent application EP 677902 in the name of the present Applicant.

In general, the dopant may be a rare earth capable of amplifying an optical signal in the transmission bandwidth.

The composition and optical characteristics of a preferred fibre among the fibres considered are summarized in Table 1 below.

**TABLE 1**

| Al₂O₃ | | GeO₂ | | La₂O₃ | | Er₂O₃ | | NA | λ_{c} |
|---|---|---|---|---|---|---|---|---|---|
| %w | (%mol) | %w | (%mol) | %w | (%mol) | %w | (%mol) | | nm |
| 4 | (2.6) | 18 | (11.4) | 1 | (0.2) | 0.2 | (0.03) | 0.22 | 911 |

in which:
%w = percentage content by weight of oxide in the core (mean)
%mol = percentage content in moles of oxide in the core (mean)
NA = Numerical aperture (n₁²-n₂²)^{1/2}
λ_{c} = Cut-off wavelength (LP₁₁ cut-off).

The analyses of the compositions were carried out on a preform (before the fibre is drawn) by means of a micro-probe combined with a scanning electron microscope (SEM Hitachi).

The analyses were carried out at a magnification of 1300 at discrete points located along a diameter and separated from each other by 200 µm.

The said fibre was made by the method of chemical deposition in the vapour phase, inside a quartz glass tube; the germanium was incorporated as a dopant in the SiO₂ matrix of the core of the fibre during the synthesis stage, while erbium, aluminium and lanthanum were incorporated into the core of the fibre by the method known as "doping in solution", in which an aqueous solution of chlorides of the dopants is brought into contact with the material for synthesizing the core of the fibre, while this is in the particulate state, before the consolidation of the preform.

Further details of the method of doping in solution can be found, for example, in U.S. 5.282.079.

The line amplifier has an attenuating component 50' between the said third amplification stage 30 and the said fourth amplification stage 40. A further attenuating component 50 is located before the said second amplification stage 20. These attenuating components 50, 50' are devices which may carry out different functions within a line amplifier.

For example, the said attenuating component may comprise a dispersion compensator for compensating the phenomenon of chromatic dispersion which occurs in fibres of the line which connects one intermediate amplification station to the next, a device for adding channels to the line or removing them from it ("add/drop" site), an equalizing filter or more generally a filter, a fixed or variable attenuator, a device in which the data are switched between one channel and another ("cross-connect" site) or an optical isolator. In general, it comprises a device which operates to affect the optical signals which pass between the intermediate stages of the amplifier.

The attenuation of this component may generally have any value in the range from 0.5 dB to 12 dB. The attenuation value may be different for different channels.

For example, an optical isolator generates an attenuation ranging from 0.5 dB to 1 dB and a dispersion compensator generates an attenuation ranging from 10 dB to 12 dB.

In the system described above, the signals transmitted from the various sources are generally amplified in a virtually uniform way, owing to the particular characteristics of the amplifiers.

The aforesaid attenuating components may also generate variations of the value of optical power, affecting the optical signals which pass through them.

For example, a variation in the total power of the channels may, for example, be caused by the add/drop site, if the number of channels present at the input of the site is different from the number of those at the output of the site, as a result of a channel adding or dropping operation.

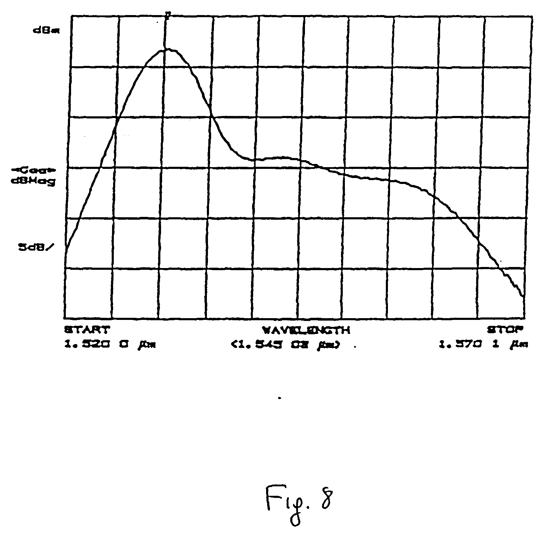

According to one aspect of the present invention, a gain stabilizing circuit is associated with the amplifier as described above (or its equivalent alternatives). This circuit makes use of the amplified spontaneous emission (hereafter termed ASE), which is generated by an amplifier as described above, particularly in the active fibres 12, 22, 32, 42 pumped respectively by the lasers 14, 24, 34, 44. The ASE is superimposed on the spectrum of channels which are present. The spectrum of this spontaneous emission for the fibre used in the example described is illustrated in Figure 8.

This circuit comprises a first selective reflection filter 16, followed by a second selective reflection filter 17, before the said first amplification stage 10, a third selective reflection filter 26 after the said second amplification stage 20, and a fourth selective reflection filter 46 after the said fourth amplification stage 40.

In general, for the purposes of the present invention, the term "filter with selective reflection at the wavelength ^{λ}" denotes an optical component capable of reflecting a substantial fraction of the radiation with a wavelength lying within a predetermined waveband centred on the wavelength λ and of transmitting a substantial fraction of the radiation with a wavelength outside this predetermined band.

Selective reflection filters of the type described above may be, for example, Bragg fibre gratings, known, for example, from the article by P.C. Hill et al. published in Electronics Letters, vol. 30, no. 14, 07/07/94, pp. 1172-1174. Filters of the type indicated are, for example, marketed by Photonetics S.A., (FR), under the symbol GRAF-, and by JDS or by Sumitomo.

For the sake of brevity, selective reflection filters will be referred to below as selective filters.

In particular, in the example described these gratings preferably reflect 99% of the optical power at the wavelength ^{λ}.

The gain stabilizing circuit also comprises, for each band, an additional bidirectional path for the ASE which enables the ASE to pass between the stages without passing through the attenuating component 50' for the band RB1 and the attenuating component 50 for the band BB. This path, similar for both bands, comprises, in a first direction, a three-port optical circulator 52 or 52' respectively, a selective filter 53 or 53', an optical coupler 54 or 54' and an optical isolator 55 or 55'.

The said three-port optical circulator is a component which has a first port 521 or 521', a second port 522 or 522' and a third port 523 or 523'. An optical signal entering the said first port is transmitted outwards from the said second port only, and an optical signal entering the said second port is transmitted outwards from the said third port only. Additionally, a signal entering the said third port is not transmitted outwards from either the said first port or the said second port.

A circulator suitable for this purpose is, for example, the HALO-1550 Q3 made by Photonics Technologies.

The signals of BB or RB1 are injected into the said first port 521 or 521'; the said second port of the circulator 522 or 522' is connected to the selective filter 53 or 53', followed by the said attenuating component 50 or 50'.

The said filters 53 and 53' are preferably Bragg fibre gratings which reflect 99% of the optical power at the operating wavelength.

The optical isolator 55 or 55' is present at the output of the attenuating component.

The said third port of the circulator 523 or 523' and the output of the optical isolator 55 or 55' are connected to the optical coupler 54 or 54' which couples the signals from the two components. Preferably, the coupling ratio of the couplers 54 and 54' is 90/10: 90% of the signal from the isolator 55 or 55' and 10% of the signal from the third port of the circulator are combined on a single output of the coupler 54 or 54'.

The optical isolators are preferably optical isolators of a type which is independent of the polarization of the transmission signal, preferably with isolation of more than 35 dB and reflectivity of less than -50 dB.

A suitable isolator is, for example, the PIFI 1550 type made by the aforesaid E-Tek Dynamics.

The return path of the ASE 1234, 1234' comprises a splitter 56 or 56' located after each coupler 54 or 54', an attenuator 57 or 57', preferably of the type with variation of the attenuation level.

This splitter 56 or 56' splits the signal injected into an input port 561 or 561' between a first output port 562 or 562' and a second output port 563 or 563' according to a predetermined splitting ratio.

Preferably, the said splitter 56' has a splitting ratio such that 10% of the optical power received from the said fourth amplification stage 40 is sent to the said attenuator 57'.

Preferably, the said splitter 56 has a splitting ratio such that 10% of the optical power from the said second amplification stage 20 is sent to the said attenuator 57.

The attenuator is, for example, a single-mode low-reflection attenuator, for example the VA5 or MV47 type made by the JDS company.

Advantageously, an optical isolator 58 or 58' of the type mentioned previously may be located along this return path of the ASE 1234, 1234'.

In the return direction of the ASE, the aforesaid paths for the band RB1 and for the band BB are reintroduced into the line by means of a pair of fused fibre couplers 59 and 59' connected in series with each other.

These couplers preferably have a coupling ratio such that 10% of the signal from the said paths is received.

The amplifier as a whole operates in the following way.

The multiple-wavelength signals at the input of the amplifier are amplified in the first stage 10 and are supplied to the filter 21 which splits the WDM signal into the two aforesaid bands and sends them along two different branches. The signals of the band BB are further amplified by the said second amplification stage 20 and those of the band RB1 are amplified by the said third amplification stage 30 and then by the said fourth amplification stage 40.

The active fibres, pumped by the lasers, have a spontaneous emission spectrum illustrated in Figure 8, which is superimposed on the spectrum of the channels present.

In suitable conditions, as defined below, the active fibres, the bidirectional additional paths for the ASE and the aforesaid selective filters may form a laser loop system for each of the bands, oscillating at a wavelength lying within the ASE spectrum and different from those of the transmitted channels.

The pairs of filters 16, 26 and 17, 46 are used to reflect the spontaneous emission of the amplifier at the predetermined wavelengths. In particular, the pair of gratings 16, 26 determines the wavelength of the recirculating ASE for the band BB and the pair of gratings 17, 46 determines the wavelength of the recirculating ASE for the band RB1. In the example described, these wavelengths are 1536 nm for the band BB and 1541 nm for the band RB1. In this particular case, therefore, the wavelength of the ASE for the band RB1 is lower than the wavelength of the channels, and for the band BB it is higher than the wavelength of the channels.

In general, these wavelengths for the ASE may be chosen within the gain band of the amplifier, near the band of the channels, or if necessary also within the band of the channels.

The gain stabilizing circuit operates in the following way.

When all the transmission channels are present at the input of the amplifier, the pump power supplied to the active fibres of the amplification stages is used for the amplification of the signals, and the corresponding ASE level is kept relatively low; the characteristics of the amplification stages, and in particular the erbium doping in the active fibres, the length of the active fibres and the pump power supplied, are predetermined so that they operate at the typical design values of the line in this condition (presence of all the transmission channels at the input of the amplifier with predetermined values of the power per channel).

In particular, active fibres, with a length of 5 m for the first stage which had a total output power of the order of approximately 6-8 dBm, 5 m for the second stage, 3.2 m for the third stage, and 7 m for the fourth stage, were used in this example.

If one or more channels are switched off, for example owing to a reconfiguration of the transmission system or owing to a fault, there is a lower total signal power level in the active fibres; this gives rise to a lower pump power consumption (no longer absorbed by the amplification of the channels which are absent) and the consequent greater availability of supplied pump power causes a greater emission of ASE in the active fibres. This excess power is reintroduced into the active fibres by means of the pairs of gratings 16, 26 for the spontaneous emission of the band BB and 17, 46 for the spontaneous emission of the band RB1 which reflect a substantial part of ASE having the reflection wavelength of the gratings. This ASE is therefore superimposed on the signals present, and its amplification in the active fibres removes pump power available for the amplification of the transmission channels present, and therefore limits the gain of these channels.

When the absent channels are reintroduced, their amplification in the active fibres consumes the available pump power, and this leads to a corresponding reduction in the level of recirculating ASE.

Thus the gain in all the channels is kept virtually constant, even in the presence of a variable number of channels present in the amplifier, when the attenuation value of the attenuators 57, 57' has been selected appropriately.

Within a band, which may be either BB or RB1, the attenuating component 50 or 50' is by-passed in order to permit the recirculation of the same fraction of ASE between the stages. Thus the effect of this component on the ASE is zero, while the recirculating ASE can pass through the first stage 10 and the second stage 20 for the band BB, and the first stage 10, the third stage 30 and the fourth stage 40 for the band RB1.

In the aforesaid first direction of the additional path, the ASE by-passes the attenuating component 50 or 51 by means of the open circulator pair 52 or 52' and filter 53 or 53'. The filter 53 or 53' reflects the same wavelength as the pair of filters 16, 26 or 17, 46 respectively.

The ASE therefore by-passes the attenuating component 50 or 50' and re-enters the input of the next stage through the coupler 54 or 54'.

In the second direction, the ASE cannot follow the same path in the opposite direction, since the presence of the circulator 52 or 52' prevents this.

In an alternative form, the circulator 52 or 52' might be a closed circulator with three ports, in other words one which additionally permits the passage of the optical signal from the third port 523 or 523' to the first port 521 or 521', making it possible to use the same path X or X' for the ASE in both directions. In this case, the attenuator 57 or 57' for the regulation of the gain would have to be located in this path, while the path 1234, 1234' would be omitted.

The splitter 56 or 56' diverts part of the ASE to a different path which also by-passes the attenuating component and returns the ASE to the output of the first stage which is common to the two bands, by means of the couplers 59 and 59'.

In the said path, the variable attenuator 57 or 57' is suitably calibrated to a value which determines the gain of the amplifier.

The level of circulating ASE is therefore regulated in a virtually automatic way as a result of a loop comprising the aforementioned paths, in which this ASE circulates in a quantity correlated with the number of channels present. The ASE absorbs the excess pump power which would be available if any of the channels were absent, leaving for the channels which are present an available pump level which is virtually constant in all conditions.

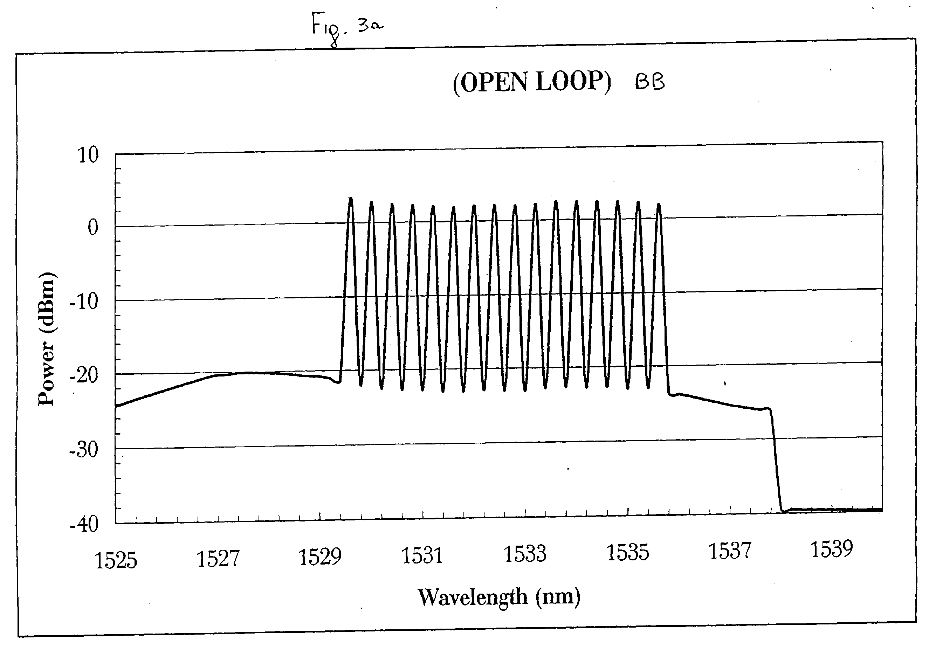

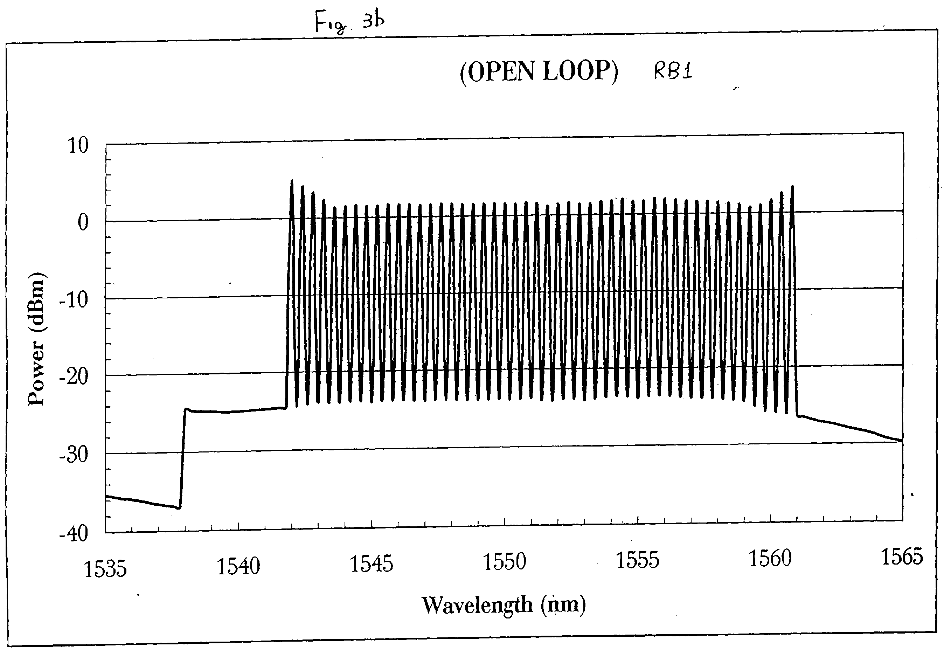

The graphs in Figures 3a to 7 are simulations which show how an amplifier according to the diagram in Figure 2 is insensitive to the variations of the number of channels and therefore has a constant gain.

Figure 3a and Figure 3b show the power spectra at the outputs of the isolators 25 and 45 of Figure 2, corresponding to the two bands RB and BB in open-loop conditions, in other words in conditions of discontinuity of the optical paths 1234 and 1234'.

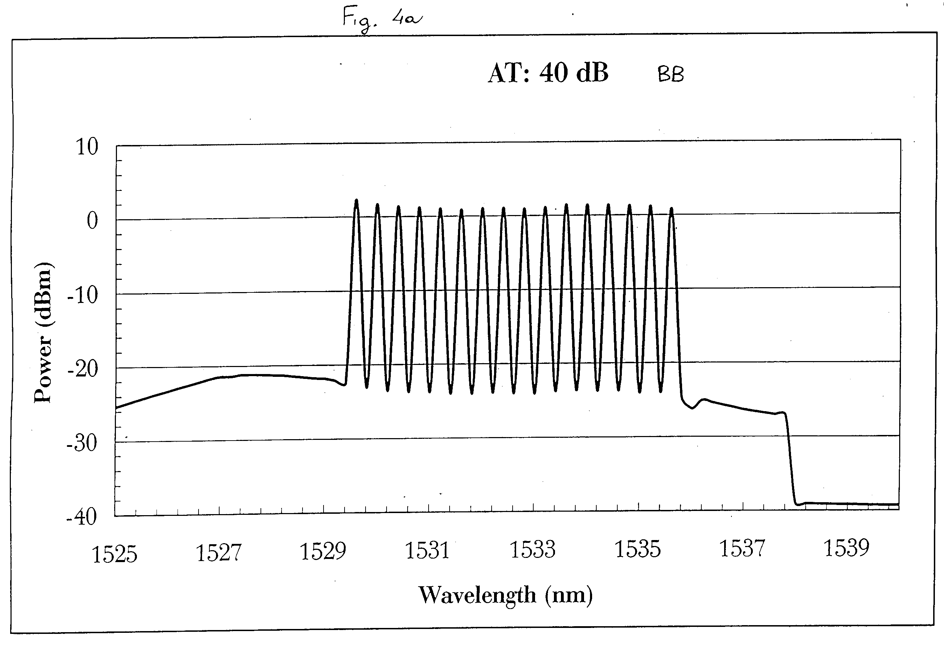

Figures 4a and 4b show the graphs of the power spectra of the two bands RB and BB in closed-loop conditions with all channels present in both bands; the attenuator 57 of BB is set to an attenuation level of 40 dB and that of RB is set to an attenuation level of 35 dB.

The Applicant has observed that the level of amplification of the various channels undergoes an insignificant variation (of the order of 1-1.5 dB) with respect to the gain in open-loop conditions.

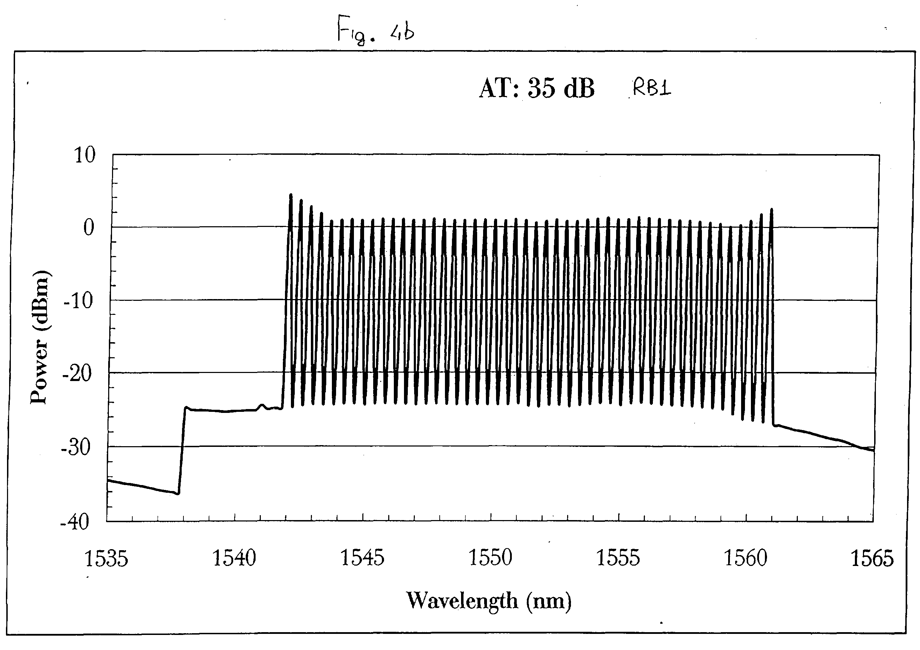

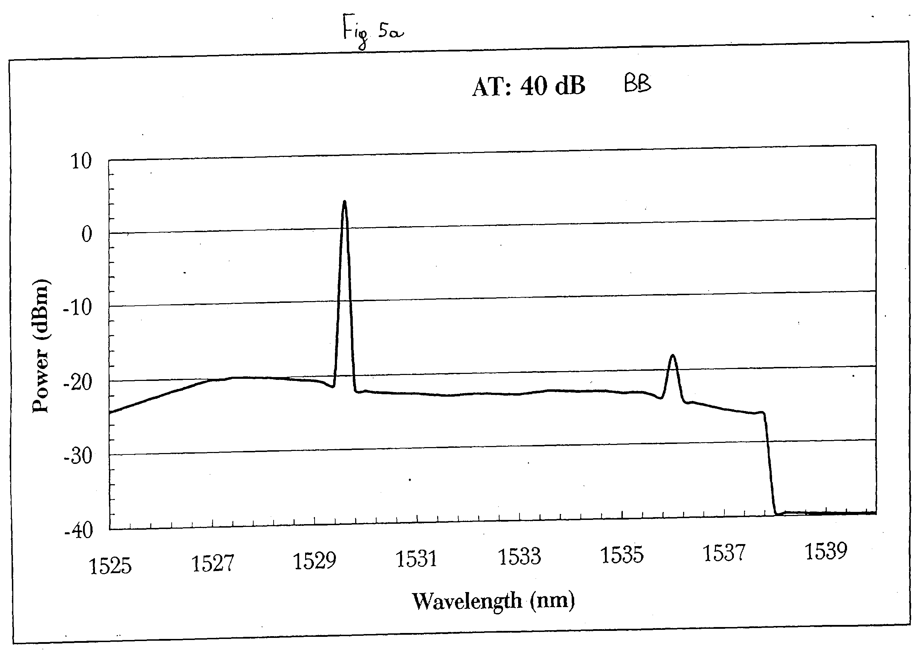

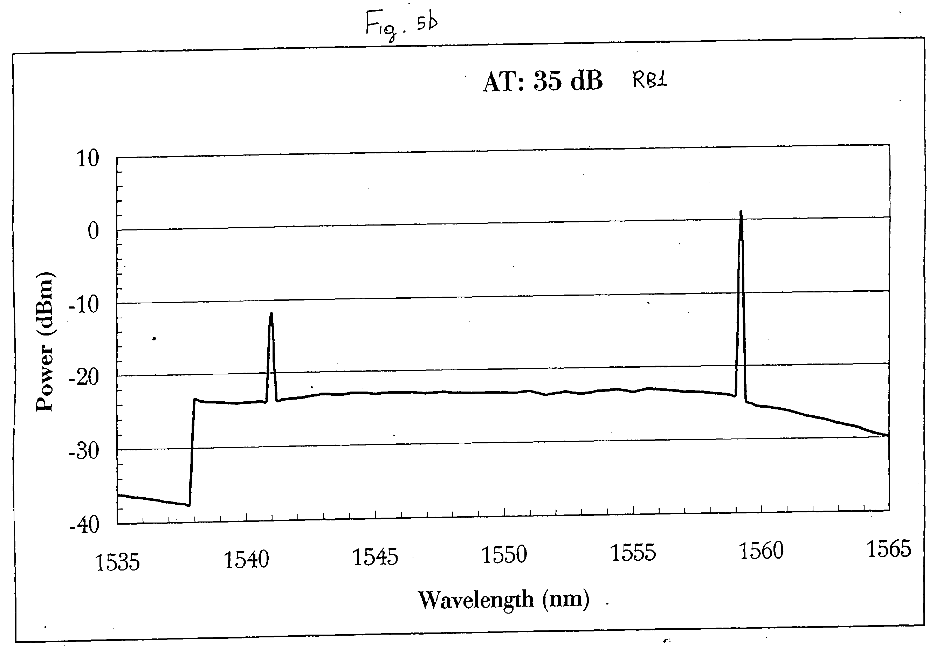

Figures 5a and 5b show the graphs of the power spectra of the two bands RB and BB in closed-loop conditions with the same attenuations as in Figures 4a and 4b but with one channel present in the band BB (^{λ} = 1530 nm approximately) and one channel present in the band RB1 (^{λ} = 1559 nm approximately).

The level of amplification of these channels undergoes an insignificant variation (of the order of 1 dB) with respect to the graphs in Figures 4a and 4b.

The Applicant has also observed that in these graphs the peak ASE at the output of the amplifier is substantially lower than in the channels for both of the bands (ASE at 1536 nm for the band BB and ASE at 1541 nm for the band RB1).

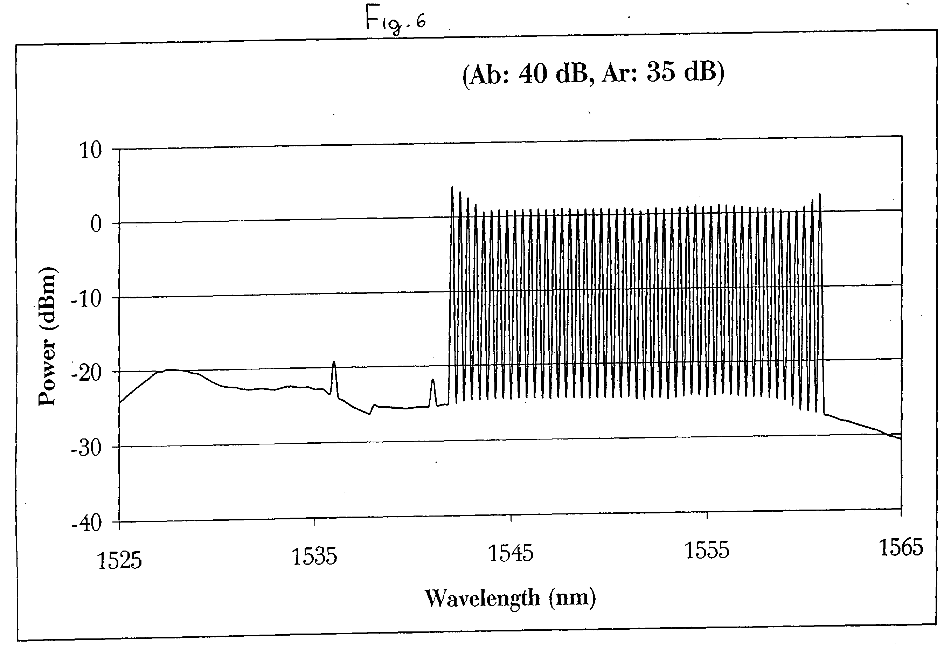

Figure 6 combines in a single graph the two bands RB1 and BB of the amplifier in closed-loop conditions with the attenuators set as stated previously, with 48 channels transmitted in the band RB1 and none in the band BB.

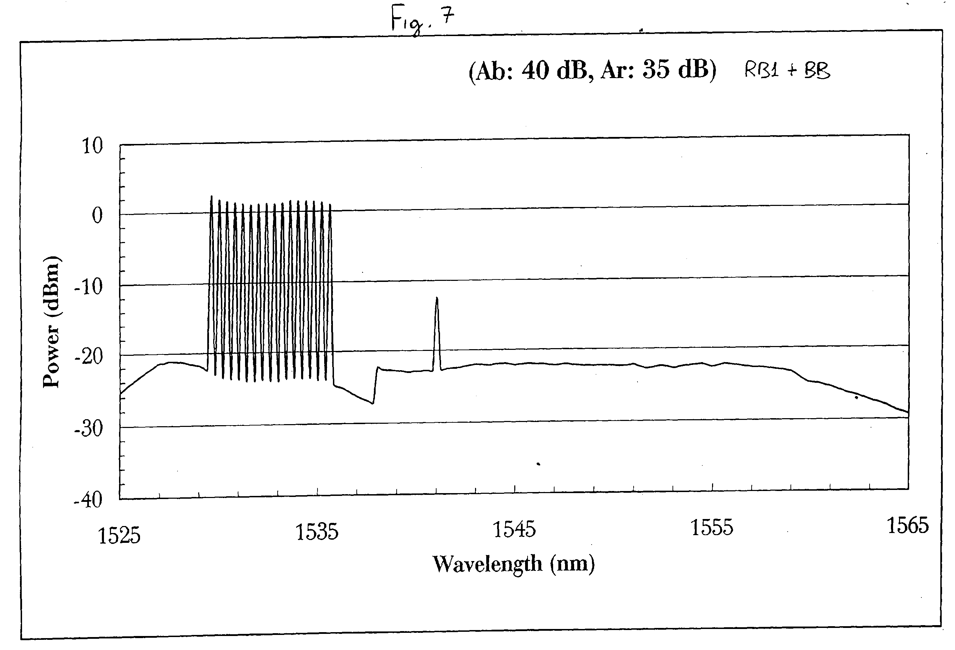

Figure 7 combines in a single graph the two bands RB1 and BB of the amplifier in closed-loop conditions with the attenuators set as stated previously, with no channels transmitted in the band RB1 and 16 channels transmitted in the band BB.

The ASE peaks for both bands can be seen in both of Figures 6 and 7.

In this case also, it may be noted that the level of amplification of the various channels is virtually constant.

A further embodiment of the present invention is applied to optical telecommunication systems in which it is necessary to amplify signals in the previously defined band RB2.

Alternatively, this configuration can be applied to systems in which the division into sub-bands is not present, but the amplifier operates in a waveband called the infrared band, corresponding to the band RB2.

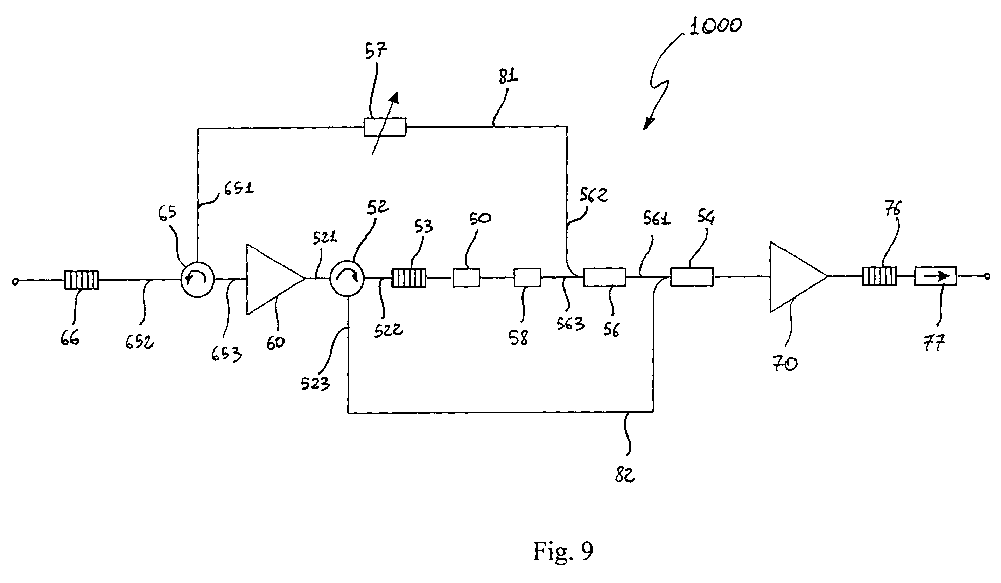

This type of embodiment is illustrated in Figure 9, and shows a multiple-stage amplifier 1000 having a first amplification unit 60 and a second amplification unit 70, each comprising at least one active fibre and at least one pumping laser connected to this active fibre by means of a dichroic coupler.

The active fibres in this amplification band are longer than in the bands BB and RB1, since the gain factor with respect to the length of the active fibre in the band RB2 is much lower than in the bands RB1 and BB.

The first amplification unit 60 may, for example, have two stages in series (two active fibres) pumped by a single laser which supplies the first stage in the same direction of propagation as that of the signals to be amplified, and supplies the second stage in the opposite direction. An optical isolator is advantageously located between the two stages to prevent the phenomenon of back-reflection on to the active fibre in which the signals are amplified.

The second amplification unit 70 may, for example, have an amplification stage comprising an active fibre and a pumping laser coupled to it by means of a dichroic coupler.

The aforesaid pumping lasers may be, for example, lasers of the quantum well type, with the following characteristics:
emission wavelength ^{λ}ₚ = 1480 nm;
maximum output optical power Pᵤ = 140 mW.

Lasers of the type indicated are produced, for example, by Sumitomo.

An active fibre suitable for this purpose is an erbium-doped aluminosilicate fibre called OLA1-230 (numerical aperture: 0.23, cut-off wavelength: 920 nm, peak absorption in the transmission band in question: 8.4 dB/m), produced by the present Applicant.

As in the preceding embodiment, an attenuating component identified by the same numeric reference 50 is present between the two amplification units.

This attenuating component is a component of the same type as that described in the embodiment shown in Figure 2, and has the same attenuation characteristics. In particular, in the remainder of the present description, the components of the same type and having the same function as those used in the preceding embodiment will be identified by the same numeric reference as that used previously.

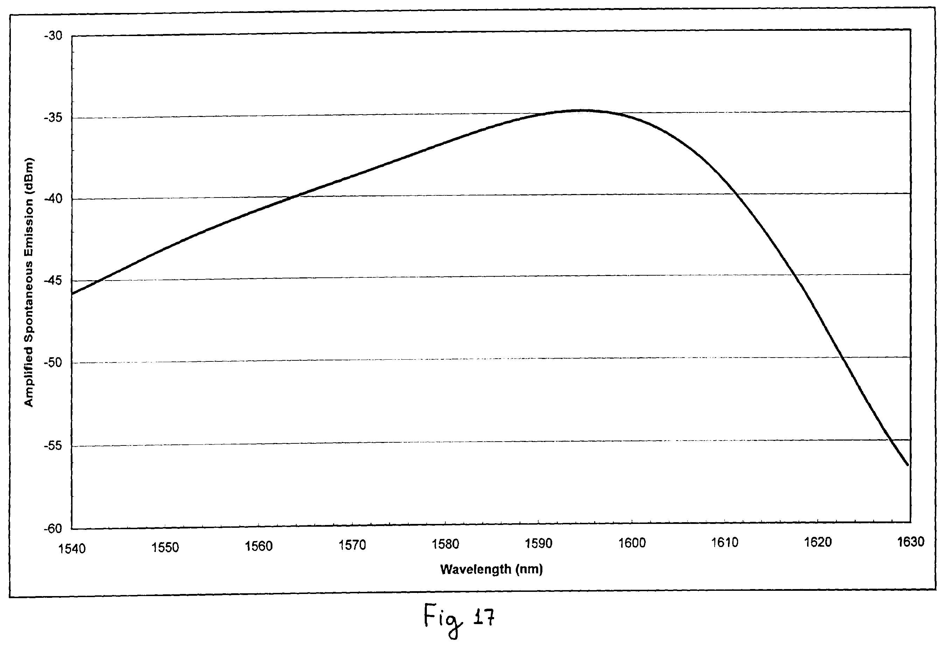

According to one aspect of the present invention, a gain stabilizing circuit is associated with the amplifier as described above (or with its alternative equivalents). This circuit makes use of the spontaneous emission which is generated by an amplifier as described above, particularly in the active fibres pumped by the lasers. The ASE is superimposed on the spectrum of channels which are present. The spectrum of this spontaneous emission is illustrated in Figure 17.

This circuit comprises a first selective reflection filter 66 before the said first amplification unit 60 and a second selective reflection filter 76 after the said second amplification unit 70.

The gain stabilizing circuit also comprises an additional bidirectional path 82 for the ASE to make it possible for the said spontaneous emission not to pass through the attenuating component 50. This path comprises a three-port optical circulator 52, a selective filter 53 and an optical coupler 54.

The signals to be amplified are injected into the first port 521 of the circulator 52; the second port 522 of the circulator is connected to the selective filter 53 followed by the said attenuating component 50.

The said filter 53 is preferably a Bragg fibre grating which reflects 99% of the optical power at the operating wavelength.

The third port of the circulator 523 and the output of the attenuating component 50 are connected to the optical coupler 54 which couples the signals from the two components towards the second amplification unit 70. Preferably, the coupling ratio of this coupler 54 is 70% for the signal from the attenuating component 50 and 30% for the signal from the third port of the circulator.

A further optical isolator 58 is advantageously located after the said attenuating component 50.

The optical isolators are preferably optical isolators of the type which is independent of the polarization of the transmission signal, preferably with an isolation of more than 35 dB and a reflectivity of less than -50 dB.

A suitable isolator is, for example, the PIFI 1550 type made by the aforesaid E-Tek Dynamics.

The path for the ASE also comprises a splitter 56 located between the isolator 58 and the coupler 54.

This splitter 56 splits the signal injected at an input port 561 between a first output port 562 and a second output port 563 according to a predetermined splitting ratio.

The said input port 561 is connected to an input of the coupler 54, the said first output port 562 is connected to a path 81 along which an attenuator 57, preferably of the type with a variable level of attenuation, is connected, and the said third port 563 is connected to the output of the optical isolator 58.

The attenuator is preferably a single-mode attenuator with low reflection, for example model number VA5 or MV47 made by the JDS company.

Preferably, the said splitter 56 has a splitting ratio such that 20% of the optical power received from the port 561 is sent to the said attenuator 57.

The signal from the path 81 is reintroduced through the attenuator 57 to the input of the first unit 60 by means of an optical circulator 65. This circulator, of the same type as the circulator 52, has a first port 651 connected to the attenuator 57, a second port 652 connected to the filter 66 and a third port 653 connected to the input of the first amplification unit 60.

A further optical isolator 77 is advantageously located after the filter 76.

The amplifier as a whole operates in the following way.

The multiple-wavelength signals at the input of the amplifier are amplified in the first unit 60 and are then further amplified by the said second amplification unit 70.

The active fibres, pumped by the lasers, have a spontaneous emission spectrum shown in Figure 17, which is superimposed on the spectrum of the channels present.

In suitable conditions, as defined below, the active fibres, the additional paths for the recirculating ASE and the aforesaid gratings may form a laser loop system, oscillating at a wavelength which lies within the ASE spectrum and is different from the wavelength of the transmission channels.

The pair of filters 66, 76 is preferably a pair of Bragg fibre gratings, and is used to reflect the spontaneous emission of the amplifier at the predetermined wavelength. In particular, the pair of filters 66, 76 determines the wavelength of the ASE. In the example described, this wavelength is 1561 nm.

In this particular case, therefore, the wavelength of the ASE is lower than the wavelength of the channels. The selection of the wavelength of the spontaneous emission affects the dynamic range of the amplifier, since it determines the quantity of the optical power supplied by the pumping laser which is used for amplifying the spontaneous emission, rather than for amplifying the transmission signals.

The gain stabilizing circuit operates in the following way.

When all the transmission channels are present at the input of the amplifier, the pump power supplied to the active fibres of the amplification stages is used for the amplification of the signals, and the corresponding ASE level is kept relatively low; the characteristics of the amplification stages, and in particular the doping in the active fibres, the length of the active fibres and the pump power supplied, are predetermined so that they operate at the typical design values of the line in this condition (with all the transmission channels present at the input of the amplifier).

In particular, active fibres, with a length of 110 m for the first unit 60 and 60 m for the second unit 70, were used in this example.

If one or more channels are switched off, there is a lower total signal power level in the active fibres; this gives rise to a lower pump power consumption (no longer absorbed by the amplification of the channels which are absent), and the consequent greater availability of supplied pump power causes a greater emission of ASE in the active fibres. This excess power is reintroduced into the active fibres by means of the pair of gratings 66, 76 which reflect the part of the ASE having the reflection wavelength of the gratings. This ASE is therefore superimposed on the signals present, and its amplification in the active fibres removes pump power available for the amplification of the transmission channels present, and therefore limits the gain of these channels.

When the absent channels are reintroduced, their amplification in the active fibres consumes the available pump power, and this leads to a corresponding reduction in the level of recirculating ASE.

Thus the gain in all the channels is kept virtually constant, even in the presence of a variable number of channels present in the amplifier.

To enable the ASE to be recirculated between one stage and another, the attenuating component 50 is by-passed. Thus the effect of this component on the ASE is zero and therefore the ASE recirculating in the first unit 60 is correlated directly with the ASE recirculating in the second unit 70.

In the additional path, the ASE by-passes the attenuating component 50 by means of the path 82, the circulator 52 and the filter 53. The filter 53 reflects the same wavelength as the pair of filters 66, 76.

The ASE therefore by-passes the attenuating component 50 and re-enters the input of the next stage by means of the coupler 54.

In the opposite direction, the splitter 56 diverts the ASE to the path 81 which also by-passes the attenuating component and returns the ASE to the input of the first unit 60 by means of the circulator 65.

In the said path 81, the variable attenuator 57 is suitably calibrated to a value which determines the gain characteristics of the amplifier.

The level of circulating ASE is therefore regulated in a virtually automatic way in a loop comprising the aforesaid paths, according to the number of channels present. The ASE absorbs the excess pump power which would be available if any of the channels were absent, leaving for the channels which are present an available pump level which is virtually constant in all conditions.

An amplifier of this type has been tested on a test bench on which an experimental amplifier was built.

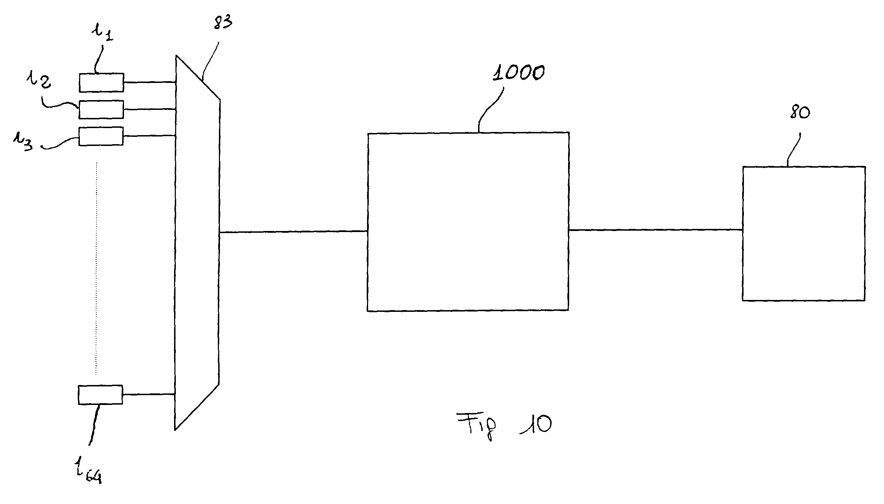

Figure 10 shows the configuration of this amplifier 1000 which is similar to that of Figure 9.

The input signal consists of 64 channels, each having its own emission wavelength, and is generated by the same number of interface units i₁-i₆₄ of the type described above. A multiplexer 83 for optical signals combines these 64 single-wavelength signals into a single multiple-wavelength signal which is sent to the first amplification unit 60.

The output of the second amplification unit is read by an optical spectrum analyser 80.

The multiplexer 83 is a unit consisting of planar optics splitters combined with each other in a suitable way to multiplex 64 single-wavelength signals into a multiple-wavelength signal. In particular, the said multiplexer comprises a 1x32 splitter, a 1x16 splitter and two 1x8 splitters, all made in planar optics.

The optical spectrum analyser used is the MS9710A mode made by Anritsu (JP).

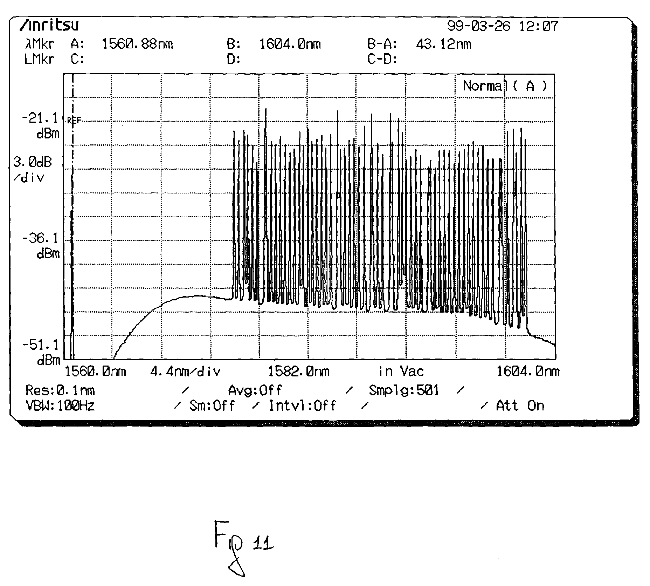

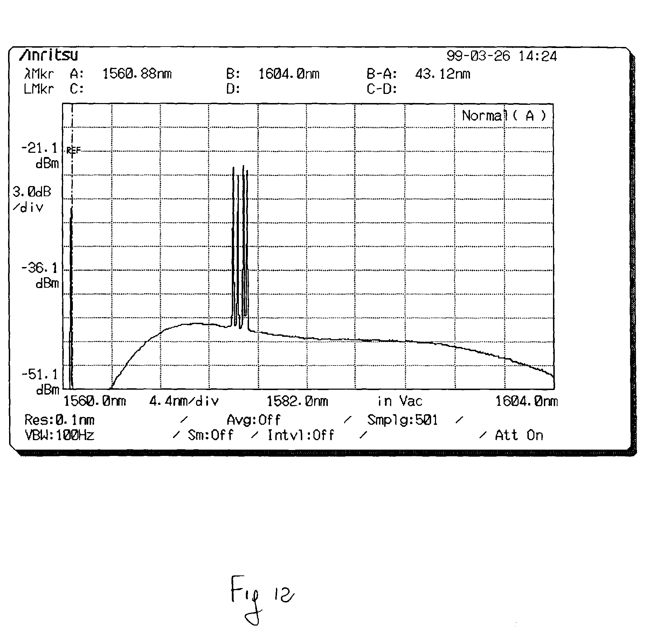

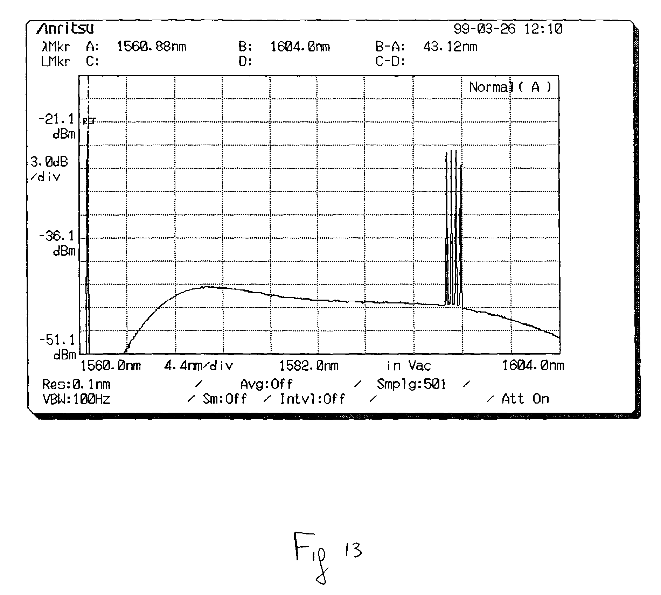

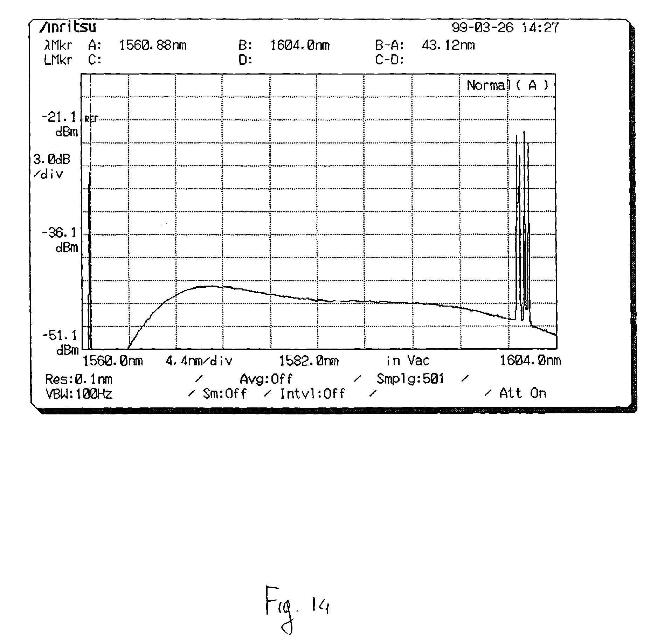

In particular, Figure 11 shows the optical spectrum at the output of the amplifier with 64 channels present and with the attenuator 57 set with the minimum attenuation permitted by the component (approximately 2 dB). The following Figures 12 to 14 show the optical spectrum at the output of the amplifier in the aforesaid conditions with 4 transmission channels present around 1575 nm (Fig. 12), with 4 transmission channels present around 1590 nm (Fig. 13), and with 4 transmission channels present around 1600 nm (Fig. 14). A comparison of the figures shows clearly that the gain of the said channels is virtually constant (subject to a difference of 1 dB in all the aforesaid conditions).

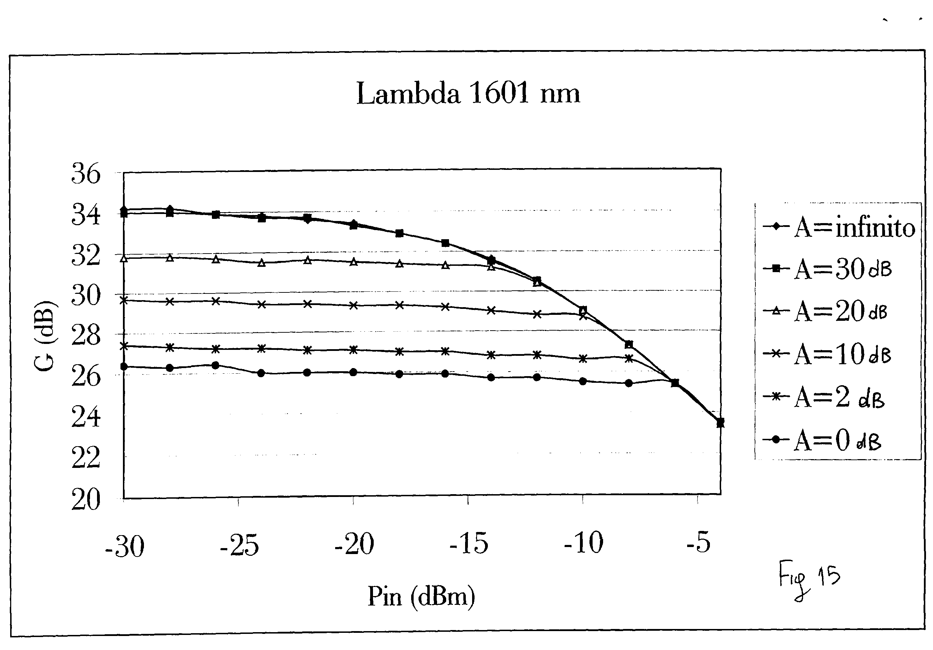

Figure 15 shows a graph representing the gain of the amplifier in Figure 9 for a channel at 1601 nm as a function of the input power for different values of loop attenuation A, and therefore as a function of the attenuation value of the attenuator. In this graph, the extracted wavelength of the spontaneous emission is 1561 nm.

The Applicant has observed that when the attenuation in the loop, and therefore of the level of attenuation introduced by the attenuator, is varied, it is possible to obtain a stabilization of the gain (the flat regions of the various curves) with different input powers (number of channels and their power). As the attenuation in the loop decreases, there is a greater stabilization with a lower amplifier gain, owing to the increase of the recirculating ASE.

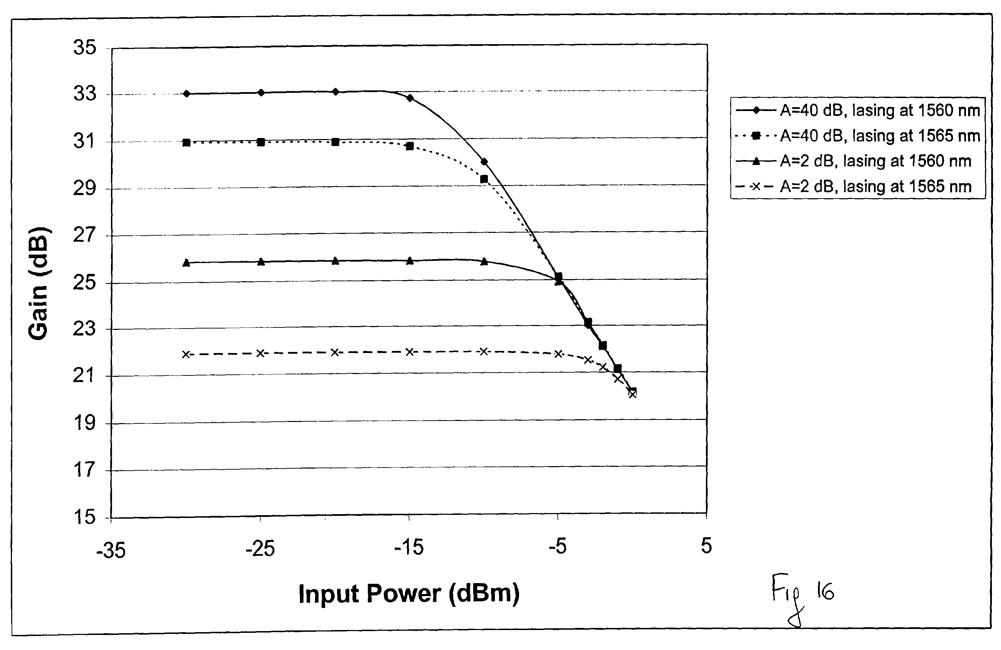

Figure 16 shows a graph of the gain of the amplifier of Figure 9 for a channel at 1601 nm as a function of the input power for some values of loop attenuation A in dB, and for two values of the wavelength of the circulating spontaneous emission, in other words the "lasing" wavelength.

The Applicant has observed that the stabilization of the gain can be improved by selecting the wavelength of the recirculating spontaneous emission, by the selection of the gratings 66, 76 and 33. This is because, in this graph, the best stabilization is obtained when the spontaneous emission is extracted at 1565 nm rather than at 1560 nm. Therefore, if the spontaneous emission is closer to the wavelength of the channels, a better gain control (a larger flat region) is obtained at a lower amplification level. In particular, the dynamic range of the amplifier increases at lower gains.

The Applicant has observed that a further parameter which affects the degree of stabilization of the amplifier gain according to the present invention is the selection of the couplers 54 and 56, since the optical power separation ratio between the ports of the coupler also determines the quantity of recirculating ASE and therefore, as described above, also determines the dynamic range of the amplifier.

Additionally, the by-passing of the attenuating component in the recirculation path of the ASE obviates the problems which this component would introduce into the recirculation of the ASE and prevents variations of attenuation due to the ageing and various operating conditions of the attenuating component from causing a variation of the lasing conditions in the path for the ASE and consequently variations of the gain of the amplifier.

More generally, the gain of the amplifier is made independent of the selection of the attenuating component and its attenuation.

Additionally, the absence of the peak ASE prevents beats between the ASE and the signals in the attenuating component.

The by-passing of the attenuating component makes it possible to have a single gain stabilizing circuit, independent of the number of stages of the amplifier, and therefore makes it easier to regulate the degree of stabilization which is to act on a single attenuator.

The Applicant has also observed that, according to the configuration of the amplifier in all its embodiments, the amplification stage or stages after the attenuating component receive the ASE in both directions in the active fibre.

If the attenuating component is a device for inserting optical channels into the line and extracting them from it (add/drop), the gain control continues to be effective if the difference between the number of channels added and those extracted does not significantly exceed 30% of the total number of channels, provided that the added channels have a power level similar to that of the channels which have not been extracted.

## Claims

1. Optical telecommunication system, comprising:
- at least one transmitting station capable of transmitting a multiple-wavelength optical signal comprising at least two predetermined wavelengths,
- an optical fibre transmission line,
- at least one receiving station, the said optical fibre line connecting the said transmitting and receiving stations,
- a station for amplifying the optical signal, located between the said transmitting station and the said receiving station, comprising at least a first amplification section and at least a second amplification section and a gain stabilizing circuit, the said amplification station additionally comprising an attenuating component located between the said two sections,
characterized in that the said gain stabilizing circuit comprises a circuit for the recirculation of the spontaneous emission, the said circuit being common to the said first amplification section and the said second amplification section.

2. System according to Claim 1, in which the said circuit for the recirculation of the spontaneous emission comprises a device for selecting a wavelength of the spontaneous emission.

3. System according to Claim 2, in which the said device for selecting a wavelength is a wavelength-selective filter located after the said second section.

4. System according to Claim 3, in which the said selecting device comprises at least one pair of filters (66, 76; 16, 26; 17, 46), of which one is located before the first amplification section (10; 60) and one is located after the second amplification section (20, 40; 70).

5. System according to Claim 4, in which the said circuit for the recirculation of the spontaneous emission comprises:
- a first path (82) in which the said spontaneous emission is extracted between the said first amplification section and the said attenuating component, and is supplied to the said second amplification section.

6. System according to Claim 5, in which the said circuit for the recirculation of the spontaneous emission has two directions of travel in the amplification sections, one being identical and one opposite to the direction of travel of the transmission signals, the said direction of travel being identical in the said first path, and in which the said circuit for the recirculation of the spontaneous emission further comprises
- a second path in which the said spontaneous emission in the opposite direction is extracted between the said second amplification section and the said attenuating component and is supplied to the said first amplification section.

7. System according to Claim 5, in which the said first path comprises:
- an optical circulator with three ports (52, 52'), whose first port (521, 521') is connected after the said first amplification section, and whose second port (522, 522') is connected to a selective grating (53, 53') located before the said attenuating component (50, 50'),
- a first optical coupler (54, 54') which couples the signals from the said attenuating component and from the third port (523, 523') of the optical circulator.

8. System according to Claim 6, in which the said second path comprises
- an optical circulator (65) whose first port (651) is connected to a variable attenuator (57), whose second port (652) is connected to the said filter (66) located before the said first amplification section, and whose third port is connected (653) to the said first amplification section,
- an optical splitter (56) located before the said second amplification section, which sends part of the signal from the input of the said second section partly towards the said variable attenuator (57).

9. System according to Claim 6, in which the said second path comprises
- an optical splitter (56, 56') located before the said second amplification section, which sends part of the signal from the input of the said second section partly towards a variable attenuator (57, 57'),
- a second optical coupler (59, 59') which sends the signal from the said variable attenuator (57, 57') to the said filter (16, 17).

10. System according to Claim 7, in which the said optical coupler (54, 54') couples at least 60% of the optical power of the signal from the said attenuating component.

11. System according to one of Claims 8 or 9, in which the said optical splitter (56, 56') sends at least 5% of the optical power towards the said variable attenuator (57, 57').

12. System according to Claim 9, in which the said coupler (59, 59') couples at least 5% of the optical power from the said variable attenuator (57, 57') towards the said filter (16, 17).

13. System according to Claim 1, in which the said circuit for the recirculation of the spontaneous emission comprises a path which does not pass through the said attenuating component.

14. System according to the preceding claims, in which the said device for selecting a wavelength of the spontaneous emission selects a wavelength of the spontaneous emission close to the spectrum of the wavelengths of the channels.

15. Optical amplifier for multiple-wavelength signals, comprising:
at least a first amplification section, at least a second amplification section and a gain stabilizing circuit, the said amplification station additionally comprising an attenuating component located between the said two sections, characterized in that the said gain stabilization circuit comprises a circuit for the recirculation of the spontaneous emission, the said circuit being common to the said first amplification section and the said second amplification section.

16. Method of optical telecommunication, comprising the steps of:
- generating at least two optical transmission signals, at predetermined wavelengths which are different from each other,
- multiplexing the said optical signals in a single transmission line, forming a multiple-wavelength optical signal comprising the said optical transmission signals,
- transmitting the said multiple-wavelength optical signal by means of the transmission line,
- amplifying the said optical signal along the transmission line,
- sending the said optical signal to a receiving station comprising at least one receiver,
characterized in that the said step of amplifying the said optical signal comprises the steps of:
- amplifying the said signal in a first amplification section,
- processing the said amplified optical signal in an attenuating component,
- amplifying the said processed optical signal in a second amplification section,
- extracting from the said amplified optical signal a fraction of the spontaneous emission of the said first and second amplification sections,
- recirculating the said fraction of spontaneous emission into the said first and second amplification sections in such a way that this fraction does not pass through the said attenuating component.

17. Method according to Claim 16, characterized in that the said recirculation step additionally comprises the step of attenuating the said fraction of spontaneous emission.

18. Method for stabilizing the gain of an optical amplifier, comprising the steps of:
- amplifying an optical signal in a first amplification section of the amplifier,
- processing the said amplified optical signal in an attenuating component,
- amplifying the said processed optical signal in a second amplification section of the amplifier,
characterized in that it additionally comprises the following steps:
- extracting from the said amplified optical signal a fraction of the spontaneous emission of the amplifier itself,
- recirculating the said fraction of spontaneous emission in the said first and second amplification sections in such a way that it does not pass through the said attenuating component.

19. Method according to Claim 18, characterized in that the recirculation step additionally comprises the step of attenuating the said fraction of spontaneous emission.
